# EUROPÄISCHE PATENTSCHRIFT

(11) **EP 3 589 161 B1**
(45) Veröffentlichungstag und Bekanntmachung des Hinweises auf die Patenterteilung: **30.03.2022**
(21) Anmeldenummer: 18708374.6
(22) Anmeldetag: 23.02.2018
(51) Int. Cl.: A47B 77/00, E05D 15/46, A47B 96/20

(54) **MÖBEL UND WANDELEMENT FÜR EIN MÖBEL**
ITEM OF FURNITURE AND WALL ELEMENT FOR AN ITEM OF FURNITURE
MEUBLE ET ÉLÉMENT DE PAROI POUR UN MEUBLE

(30) Priorität: 28.02.2017 DE 102017104183
(43) Veröffentlichungstag der Anmeldung: 08.01.2020
(73) Patentinhaber: ambigence GmbH & Co. KG, 32052 Herford (DE)
(72) Erfinder: SOBOLEWSKI, Uwe, 32257 Bünde (DE); POPPENBORG, Norbert, 32105 Bad Salzuflen (DE); ANDSCHUS, Stefan, 32312 Lübbecke (DE); TASCHE, Michael, 33659 Bielefeld (DE); GÖTZ, Gerhard, 32257 Bünde (DE)
(74) Vertreter: Kleine, Hubertus
(86) Internationale Anmeldenummer: PCT/EP2018/054531
(87) Internationale Veröffentlichungsnummer: WO 2018/158153

(56) Entgegenhaltungen:
- WO-A1-2010/130570
- WO-A1-2017/029199
- DE-U1-202014 105 730
- FR-A1- 2 387 617
- US-A- 3 023 910
- US-A1- 2004 239 216
- US-B1- 9 386 847

## Beschreibung

Erfindung betrifftein plattenförmiges Wandelement für ein Möbel, sowie ein Möbel mit einem solchen Wandelement.

In der Regel weisen Möbel einen Möbelkorpus auf, der üblicherweise aus mindestens vier Wänden besteht, nämlich zwei Seitenwänden, einem Oberboden und einem Unterboden. Diese Wände sind fest miteinander verbunden und bilden eine bauliche Einheit, den genannten Möbelkorpus. Um eine nach vorne weisende Öffnung des Möbelkorpus verschließen zu können, werden innen an dem Möbelkorpus Beschläge montiert, die Türen, Klappen, Schubkästen mit einer Schubkastenfront oder sonstige bewegbare Möbelteile führen.

Alternativ zu einer Befestigung der Beschläge am Möbelkorpus ist es bei Türscharnieren bekannt, in eine Stirnseite einer Seitenwand des Möbelkorpus eine Tasche zu fräsen, in die das Türscharnier von vorne einsetzbar ist. Ein zum Einsatz in einer derartigen eingefrästen Tasche geeignetes Scharnier ist beispielsweise aus der Druckschrift DE 155 9963 bekannt.

Eine weitere Art, ein Scharnier innerhalb eines Möbelkorpus zu montieren, zeigt die Druckschrift DE 20 2013 003 189 U1 Hierbei ist eine Seitenwand des Möbelkorpus abschnittsweise aus unterschiedlichen Teilen aufgebaut, wobei ein hinterer, einer Möbelfront abgewandter Teil herkömmlich ausgebildet ist, z.B. durch ein beschichtetes Holzelement. Ein vorderer Teil der Seitenwand ist durch ein in der genannten Schrift nicht näher beschriebenes Gehäuse gebildet, das mindestens eine stirnseitige Öffnung aufweist, in die ein Beschlag eingeschoben werden kann. Auf diese Weise können auch Beschläge mit einer größeren Einbautiefe eingesetzt werden, was mit einer stirnseitig vorgenommenen Einfräsung nicht möglich ist.

Unabhängig davon, ob Scharniere innen auf eine Seitenwand des Möbelkorpus aufgesetzt oder in die Seitenwand eingesetzt werden, basieren bekannte Möbel auf der Verwendung eines in der Regel quaderförmigen Möbelkorpus als Grundelement, an dem bewegbare Möbelteile über Beschläge befestigt sind. Andere ähnliche Möbel sind zum Beispiel aus WO2017029199A1 und WO2010130570A1 bekannt.

Es ist eine Aufgabe der vorliegenden Erfindung, ein Möbel zu schaffen, das auf einem flexibler einzusetzenden Grundelement basiert.

Diese Aufgabe wird gelöst durch ein plattenförmiges Wandelement für ein Möbel mit den Merkmalen des unabhängigen Anspruchs. Vorteilhafte Ausgestaltungen und Weiterbildungen sind in den abhängigen Ansprüchen angegeben.

Ein erfindungsgemäßes Möbel zeichnet sich dadurch aus, dass es zumindest ein plattenförmiges Wandelement nach dem unabhängigen Anspruch aufweist.

Ein erfindungsgemäßes Möbel basiert somit nicht auf einem vorgefertigten Möbelkorpus, sondern weist das mindestens eine plattenförmige Wandelement als Grundbaustein auf, das mit weiteren Möbelkomponenten verbunden werden kann. Dadurch, dass das Wandelement sowohl den Beschlag als auch Verbindungselemente integral enthält, ermöglicht es einen flexiblen Aufbau eines Möbels unter Verwendung von weiteren Komponenten, die keine weiteren Funktionselemente aufnehmen müssen. Das führt zu einer großen Flexibilität in beispielsweise der Materialauswahl und der Dimensionierung der weiteren Möbelkomponenten. Diese können beispielsweise aus schwieriger zu bearbeitenden Materialien wie Glas, Stein oder Metall gefertigt sein, da sie z.B. keine Beschläge aufnehmen müssen.

Im Rahmen der Anmeldung kann das Wandelement im Möbel in jeder Ausrichtung eingesetzt sein. Insbesondere kann das Wandelement eine (vertikale) Seitenwand oder Zwischenwand sein oder auch ein (horizontaler) Ober-, Unter- oder Zwischenboden. Auch eine schräge, beispielsweise diagonale Anordnung ist möglich.

In einer vorteilhaften Ausgestaltung des Möbels kann als weitere Möbelkomponente ein seinerseits plattenförmiges Element eingesetzt werden, das eine Fläche aufweist, auf der das mindestens eine plattenförmige Wandelement mit einer Stirnseite anliegt. Auf diese Weise kann ein Regal-ähnlicher Aufbau erreicht werden, wobei Klappen oder Türen zum Verschließen von Fächern, die durch die plattenförmigen Wände bzw. die weiteren plattenförmigen Bauelemente gebildet sind, vorgesehen werden können.

Bevorzugt sind mindestens zwei plattenförmige Wandelemente mit integriertem Beschlag vorhanden, die parallel zueinander angeordnet sind. Zwischen beiden parallelen Wandelementen ist ein quaderförmiges Element, z.B. ein nach vorne offener Kasten, eingesetzt. Bevorzugt ist dieses quaderförmige Element aus einem anderen Material gefertigt, als das Wandelement. Während das Wandelement bevorzugt auf einem Holz- oder holzbasierten und bevorzugt spanend bearbeitbaren Werkstoff als Grundwerkstoff gefertigt ist, kann das quaderförmige Element aus Werkstoffen wie Glas, Stein oder Beton gefertigt sein, die schwer, insbesondere nicht spanend zu bearbeiten sind und ihrerseits Beschläge nicht oder nur mit hohem Fertigungsaufwand aufnehmen können.

In einer vorteilhaften Ausgestaltung des Möbels bilden der Unter- und/oder Oberboden die Breite des Möbels und wenigstens ein plattenförmiges Wandelement ist mindestens 10 cm von einer Außenkante des Unter- und/oder Oberbodens beabstandet. Auf diese Weise unterteilt das plattenförmige Wandelement zusätzlich den Innenraum des Möbels. Es führt den Beschlag und dient gleichzeitig als Organisations- oder Strukturierungselement für den Innenraum.

Die Aufgabe wird gelöst durch ein plattenförmiges Wandelement, das einen integrierten Beschlag und integrierte Verbindungselemente zur Verbindung mit weiteren Möbelkomponenten aufweist. Ein derartiges Wandelement ermöglicht den Aufbau des zuvor beschriebenen Möbels. Es ergeben sich somit die im Zusammenhang mit dem Möbel beschriebenen Vorteile.

In vorteilhaften Ausgestaltungen des Wandelements ist das mindestens eine Verbindungselement ein Gewindeeinsatz oder eine Kombination aus einem Lang- und einem Querloch zur Aufnahme eines Drehverbinders. Die mit dem Wandelement zu verbindende weitere Möbelkomponente kann entsprechend über Schrauben oder Bolzen mit einem Verbindungskopf, der vom Drehverbinder hintergriffen wird, befestigt werden. Auch kann als Verbindungselement in dem Wandelement eine Profilnut ausgebildet sein oder eine Feder angeordnet oder ausgebildet sein. An der zu verbindenden weiteren Möbelkomponente ist entsprechend einer passende Feder, z.B. in Form einer Profilleiste, bzw. eine passende Profilnut vorhanden.

Erfindungsgemäß weist das Wandelement mindestens einen Kern auf, der in einer Ebene mit dem Beschlag angeordnet ist, wobei der mindestens eine Kern und der Beschlag zwischen zwei durchgehenden

Decklagen angeordnet sind. Ein derart aufgebautes Wandelement zeichnet sich durch eine durchgehend gleiche Optik und Haptik seiner Seitenfläche aus. Der Kern ist erfindungsgemäß aus Holz oder einem Holzverbundwerkstoff wie MDF (Medium-Density Fiberboard) oder HDF (High-Density Fiberboard) gefertigt .

Der Beschlag wird vorteilhaft bereits beim Zusammenfügen des Wandelements in dieses integriert. So kann auch ein großer Beschlag mit einer großen Einbautiefe, der sich beispielsweise sogar über die im Wesentlichen gesamte Breite des Wandelements erstreckt, eingesetzt werden. Insbesondere können Klappenbeschläge eingesetzt werden, deren Hebelwerk vollständig (ggf. bis auf Montageelemente, an denen das bewegbare Möbelteil befestigt wird) in eine Öffnung in einer Stirnseite des Wandelements eingefahren werden kann.

Erfindungsgemäß sind die beiden durchgehenden Decklagen flächig mit dem mindestens einen Kern und/oder dem Beschlag verbunden, beispielsweise auflaminiert. Die flächige Verbindung stabilisiert das Wandelement und ermöglicht die Verwendung von relativ dünnen Decklagen mit Dicken im Bereich von zehntel Millimetern.

Die Erfindung wird nachfolgend anhand von Ausführungsbeispielen mithilfe von Figuren näher erläutert. Die Figuren zeigen:
- Fig. 1: eine isometrische Explosionsdarstellung einer Seitenwand für ein Möbel mit einem Möbelfuß;
- Fig. 2a, b: unterschiedliche isometrische Darstellungen eines Möbels mit mehreren anmeldungsgemäßen Wandelementen;
- Fig. 3: ein weiteres Ausführungsbeispiel eines Möbels mit zwei anmeldungsgemäßen Wandelementen in einer isometrischen Darstellung;
- Fig. 4-6: jeweils ein weiteres Ausführungsbeispiel eines Wandelements mit einem Möbelfuß in einer Darstellung analog zu Fig. 1; und
- Fig. 7: eine schematische Draufsicht auf eine vordere Stirnseite eines Wandelements im Bereich eines eingesetzten Beschlags.

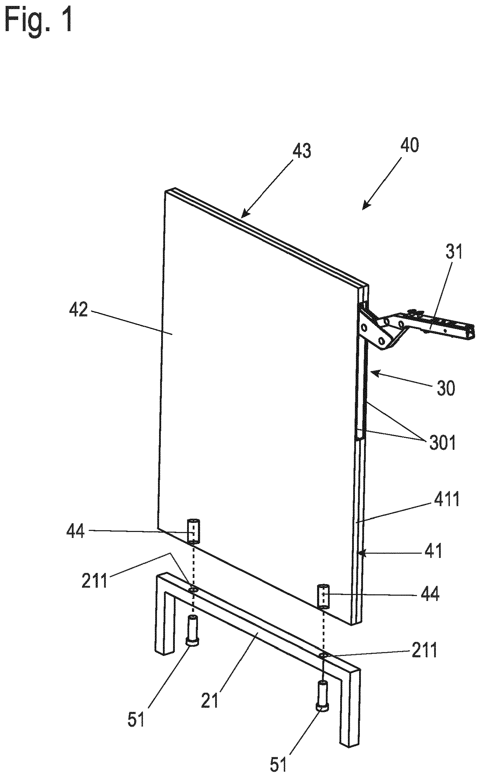

Fig. 1 zeigt in einer isometrischen Schrägansicht ein anmeldungsgemäßes Wandelement 40, in das ein Beschlag 30 integriert ist.

Das plattenförmige Wandelement 40 weist einen Kern 41 auf, beispielsweise gefertigt aus einer Spanplatte oder aus einer mittel- oder hochverdichteten Faserplatte (MDF bzw. HDF). In gleicher Ebene wie der Kern 41 und bevorzugt mit gleicher Dicke ist der Beschlag 30 angeordnet, derart, dass sich der Kern 41 und der Beschlag 30 in Form und Größe so ergänzen, dass sie zusammen die Abmessungen des Wandelements 40 aufweisen.

Erfindungsgemäß ist der Kern 41 zweiteilig ausgebildet und in der Ebene der lateralen Ausdehnung des plattenförmigen Wandelements 40 geteilt. In jede der Kernhälften ist eine Aussparung eingebracht, in die der Beschlag 30 eingesetzt ist. Der Kern 41 bzw. seine beiden Hälften und der Beschlag 30 können über hier nicht sichtbare Verbindungselemente, beispielsweise Schrauben, Klammern, Stifte, Krampen oder ähnliches miteinander verbunden sein. Auch eine Klebeverbindung kann neben den genannten Verbindungselementen oder als einzige Verbindung vorgesehen sein.

Alternativ zu dem dargestellten zweiteiligen Kern 41 kann der Kern erfindungsgemäß auch einteilig ausgebildet sein mit einer Ausnehmung, in die der Beschlag 30 eingesetzt ist.

Auf die Anordnung aus dem Kern 41 und dem damit gegebenenfalls verbundenen Beschlag 30 werden von jeder Seite her Decklagen 42, 43 aufgebracht, insbesondere geklebt oder auflaminiert. Der Beschlag 30 ist dabei bezüglich seines Materials und der Materialstärke beispielsweise von Seitenplatten 301 des Beschlags 30 so gewählt, dass er auch bei einem Laminierprozess nicht eingedrückt wird, was andernfalls zu einer Unebenheit der Oberfläche der Decklagen 42, 43 führen könnte. Kleinere Unebenheiten in den Seitenplatten des Beschlags 30 werden durch die Decklagen 42, 43 ausgeglichen. Solche kleineren Unebenheiten können beispielsweise durch Lagerstellen von Bolzen, die der schwenkbaren Lagerung des Hebelwerks 31 im Beschlag 30 dienen, herrühren.

Der Beschlag 30 ist vorliegend ein Klappenbeschlag, der eine um eine horizontale Achse schwenkbare Klappe führt, über die eine Möbelöffnung verschlossen werden kann. Eine solche Klappe ist aus Gründen der Übersichtlichkeit in der Fig. 1 nicht dargestellt. Vom Beschlag 30 ist lediglich ein ausgefahrener Teil eines Hebelwerks 31 in der Fig. 1 sichtbar. Der Beschlag 30 ist so in das Wandelement 40 integriert, dass in geschlossenem Zustand der vom Beschlag 30 geführten Klappe das Hebelwerk 31 gegebenenfalls bis auf Montageelemente zur Verbindung mit der Klappe vollständig in das Wandelement 40, konkret in eine vordere Stirnseite 411, eingefahren ist.

Darüber hinaus weist das Wandelement 40 Verbindungselemente zur Verbindung mit weiteren Möbelkomponenten auf. In der Fig. 1 ist beispielhaft ein u-förmiger Möbelfuß 21 als eine solche weitere Möbelkomponente dargestellt.

Im Wandelement 40 sind an einer unteren Stirnseite Gewindeeinsätze 44 verdeckt in den Kern 41 eingesetzt, die als Verbindungselemente der Verbindung des Wandelements 40 mit dem Möbelfuß 21 dienen. Im Möbelfuß 21 sind entsprechend positionierte Bohrungen 211 angebracht, durch die Schrauben 51 geführt sind, die in die Gewindeeinsätze 44 eingeschraubt werden.

Mit dem integrierten Beschlag 30 sowie den Verbindungselementen weist das Wandelement 40 alle notwendigen technischen Funktionselemente auf, um ein Möbel auch ohne einen expliziten Möbelkorpus aufbauen zu können.

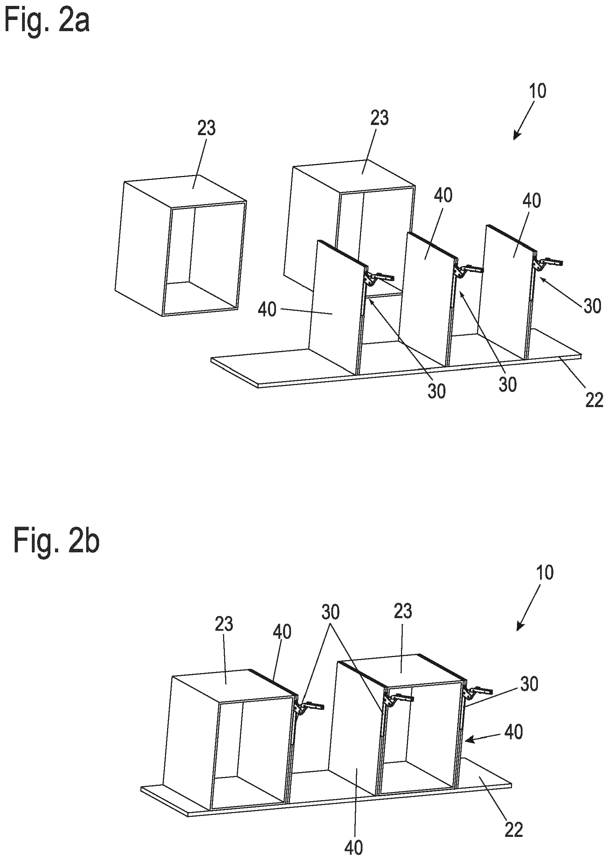

In den Fig. 2a und 2b ist ein anmeldungsgemäßes Möbel 10, das mehrere der in Fig. 1 gezeigten Wandelemente 40 aufweist, dargestellt. Fig. 2a zeigt das Möbel in einem teils zusammengesetzten Zustand und Fig. 2b dann zusammengesetzt.

Das Möbel 10 umfasst im dargestellten Zustand drei Wandelemente 40 mit jeweils integriertem Beschlag 30, die mit ihrer unteren Stirnseite mit einem durchgängigen Unterboden 22 als Möbelkomponente verbunden sind. Zur Verbindung werden wiederum in das Wandelement 40 integrierte Verbindungselemente eingesetzt, beispielsweise die in Fig. 1 gezeigten Gewindeeinsätze 44, in die von unten hier nicht sichtbare Schrauben eingeschraubt werden.

Zwischen zwei der Wandelemente 40 bzw. an eines der Wandelemente 40 werden nach vorne offene Kästen 23 eingestellt, die hier beispielhaft Innenräume des Möbels 10 bereitstellen. Da alle technischen Funktionselemente wie der Beschlag 30 sowie die Verbindungselemente bereits in den Wandelementen 40 enthalten sind, können die Kästen 23 im Hinblick auf die Materialwahl frei gestaltet werden und beispielsweise aus Glas, Stein oder Metall aufgebaut sein.

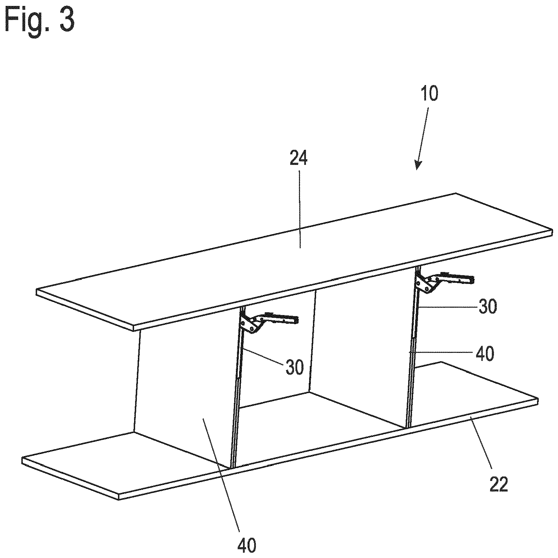

Fig. 3 zeigt ebenfalls in einer isometrischen Darstellung ein weiteres Beispiel eines anmeldungsgemäßen Möbels. Hierbei werden zwei beabstandete und parallel zueinander ausgerichtete Wandelemente 40 eingesetzt, die wiederum ähnlich wie beim Beispiel der Fig. 2a, b auf einen Unterboden 22 aufgestellt und über die integrierten Verbindungselemente mit diesem verbunden sind.

Die Wandelemente 40 weisen zudem vergleichbare Verbindungselemente an der gegenüberliegenden oberen Stirnseite auf, über die sie mit einem oben aufgesetzten Oberboden 24 verbunden sind. Es entsteht ein Regal-ähnliches Möbel, dessen vordere Fläche ganz oder im Bereich zwischen den beiden Wandelementen 40 mit einer hier nicht dargestellten Klappe verschließbar ist.

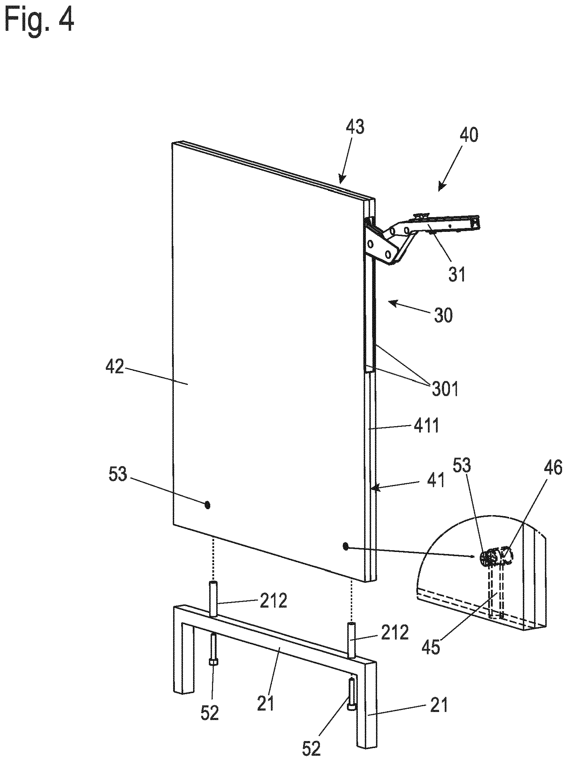

In den Fig. 4, 5 und 6 sind in jeweils gleicher Art wie in Fig. 1 weitere Ausführungsbeispiele eines Wandelements 40 mit integriertem Beschlag 30 und integrierten Verbindungselementen zur Verbindung mit weiteren Möbelkomponenten gezeigt.

Gleiche Bezugszeichen kennzeichnen in diesen Figuren gleiche oder gleichwirkende Elemente wie bei den zuvor beschriebenen Figuren. Im Hinblick auf den Grundaufbau des Wandelements 40 wird auf die Ausführungen zu Fig. 1 verwiesen.

Beim Ausführungsbeispiel der Fig. 4 sind als Befestigungsmittel von der unteren Stirnseite in den Kern 41 Längsbohrungen 45 eingebracht, die in Querbohrungen 46 übergehen, die von einer Decklage aus (hier der Decklage 42) in eine Seitenfläche des Wandelements 40 eingebracht sind. In die Querbohrungen 46 sind Drehverbinder 53 eingesetzt, die mit Bolzen 52 zusammenwirken, die durch den Möbelfuß 21 in die Längsbohrungen 45 eingesetzt werden. Die Bolzen 52 haben an ihrem Ende in der Figur nicht dargestellte Köpfe, die von den Drehverbindern 53 gegriffen werden. Die den Kopf hintergreifenden Flächen sind dabei bevorzugt exzentrisch im Drehverbinder 53 ausgebildet, sodass der Bolzen 52 in das Wandelement 40 hineingezogen wird und entsprechend der Möbelfuß an das Wandelement 40 herangezogen wird. So wird eine belastbare Verbindung zwischen dem Möbelfuß 21 und dem Wandelement 40 erzielt. Zusätzlich können wie beim dargestellten Beispiel am Möbelfuß 21 durchbohrte Dübel 212 vorgesehen sein, die in die Längsbohrung 45 eingesteckt werden und durch die die Bolzen 52 geführt sind.

Es versteht sich, dass die dargestellte Art der Verbindung und das in dem Wandelement 40 ausgebildete Verbindungselement nicht nur an der hier beispielhaft zur Verbindung mit dem Möbelfuß 21 gezeigten unteren Stirnseite vorgesehen sein kann, sondern auch an der oberen und/oder der hinteren Stirnseite. Weiter wird darauf hingewiesen, dass die Verbindung mit dem Möbelfuß 21 rein beispielhaft ist. Die in den Fig. 4-6 gezeigten Verbindungselemente können beispielsweise auch zur Verbindung mit dem Unterboden 22 bzw. dem Oberboden 24 in dem Ausführungsbeispielen der Fig. 2a, 2b und 3 eingesetzt werden.

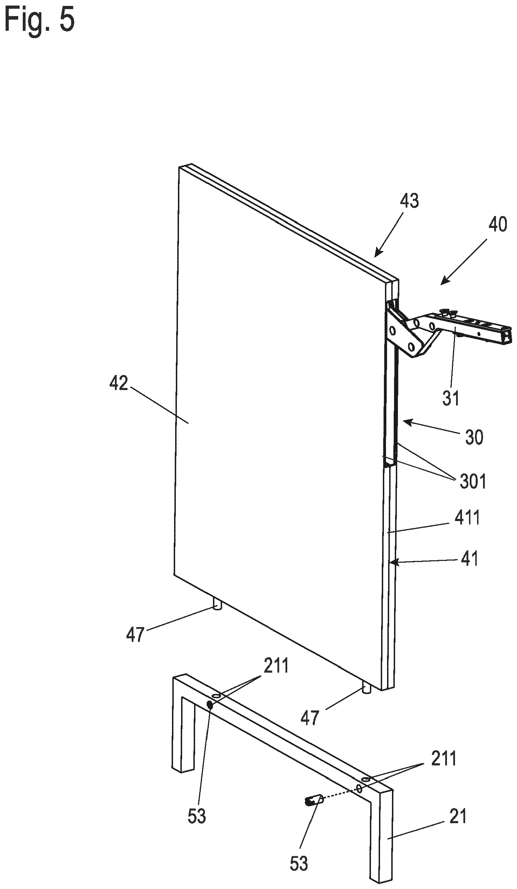

Beim Ausführungsbeispiel der Fig. 5 wird ebenfalls ein Drehverbinder 53 in Verbindung mit einem Bolzen eingesetzt, wobei hierbei jedoch der Drehverbinder 53 im Möbelfuß 21 in einer entsprechenden Bohrung 211 eingesetzt wird. Am Wandelement 40 sind hier wiederum beispielhaft an der unteren Stirnseite zwei Bolzen 47 angeordnet, die in die Bohrung 211 des Möbelfußes 21 gesteckt werden und mithilfe der Drehverbinder 53 befestigt werden. Die Bolzen 47 können beispielsweise mit einem Gewinde versehen sein und in entsprechende Bohrungen in den Kern 41 des Wandelements 40 eingeschraubt sein.

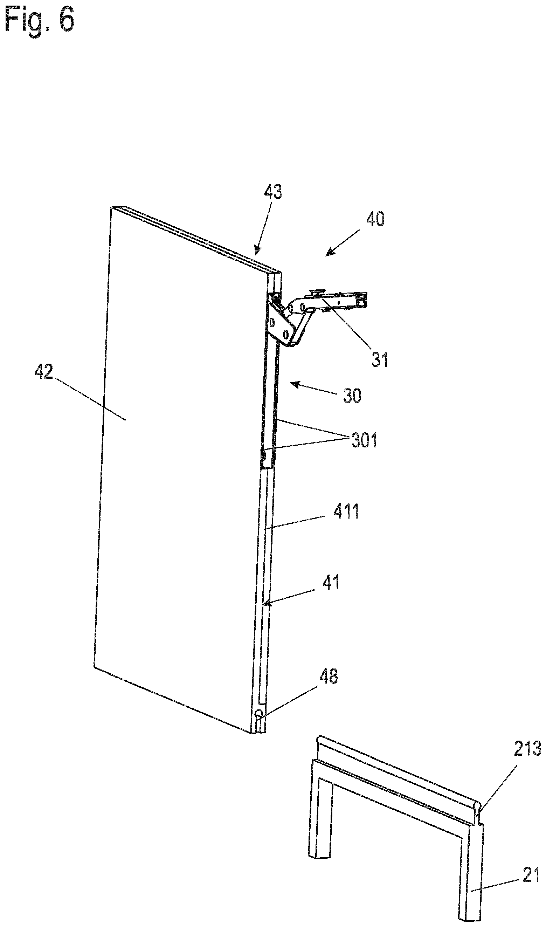

Beim Beispiel der Fig. 6 ist eine Nut- und Federverbindung zwischen dem Wandelement 40 und der weiteren Möbelkomponente, hier wiederum beispielhaft ein Möbelfuß 21, vorgesehen. Dazu ist an der unteren Stirnseite des Wandelements 40 eine Profilnut 48 bevorzugt über die gesamte Breite des Wandelements 40 ausgebildet, in die eine entsprechend geformte Profilleiste 213 eingeschoben wird, die am Möbelfuß 21 angeordnet bzw. ausgebildet ist. Beispielhaft weist die Profilnut 48 ein schlüssellochförmiges bzw. pilzförmiges Profil auf. Es versteht sich, dass andere hinterschnittene Profile wie beispielsweise ein Trapezprofil, ein T-förmiges Profil oder ein Tannenbaumprofil Verwendung finden können.

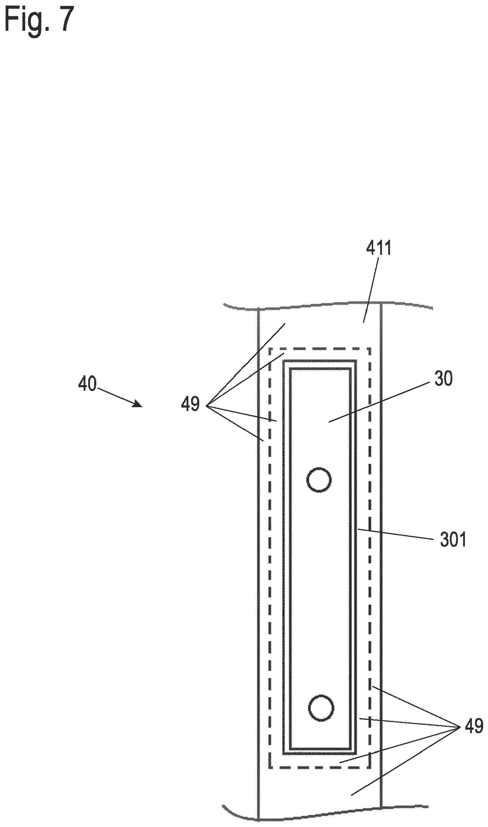

Fig. 7 zeigt in einer Draufsicht eine vordere Stirnseite 411 eines Wandelements 40 im Bereich des Beschlags 30. Bei diesem Ausführungsbeispiel ist ein Kantenumleimer 49 als Schmalseitenbeschichtung auf die vordere Stirnseite 211 des Kerns 21 und damit der des Wandelements 40 aufgebracht.

Im Bereich der Öffnung des Beschlags 30, aus der beispielsweise das in dieser Darstellung nicht sichtbare Hebelwerk 31 ausfährt, ist der Kantenumleimer 49 ausgespart. Der Kantenumleimer 49 wird nach Integration des Beschlags 30 in das Wandelement 40 oder auch nach Einsetzen des Beschlags 30 in das Wandelement 40 auf die vordere Stirnseite 411 aufgebracht.

Der Kantenumleimer 49 ist so ausgeschnitten, dass er abschnittsweise auf dem Beschlag aufliegt und z.B. die Kanten der Seitenplatten 301 des Beschlags 30 oder anderer außerhalb der Öffnung des Beschlags 30 sichtbarer Elemente abdeckt. In der Fig. 6 sind die Umrisse des Beschlags 30 gestrichelt angedeutet. Durch die Anordnung des Kantenumleimers 49 auch auf Abschnitten des Beschlags 30 ist der Beschlag 30 - bis auf das ausfahrbare Hebelwerk 31 - vollständig in das Wandelement 40 integriert und an dessen vorderer Stirnseite 411 nicht mehr sichtbar.

### Bezugszeichen

- 10: Möbel

- 21: Möbelfuß
- 211: Bohrung
- 212: Dübel
- 213: Profilleiste
- 22: Unterboden
- 23: Kasten
- 24: Oberboden

- 30: Beschlag
- 301: Seitenplatte
- 31: Hebelwerk

- 40: Wandelement
- 41: Kern
- 411: vordere Stirnseite
- 42,43: Decklage
- 44: Gewindeeinsatz
- 45: Längsbohrung
- 46: Querbohrung
- 47: Bolzen
- 48: Profilnut
- 49: Kantenumleimer

- 51: Schraube
- 52: Bolzen
- 53: Drehverbinder

## Patentansprüche

1. Plattenförmiges Wandelement (40) für ein Möbel (10), aufweisend mindestens einen integrierten Beschlag (30) und mindestens ein integriertes Verbindungselement zur Verbindung mit mindestens einer weiteren Möbelkomponente, wobei
das plattenförmige Wandelement (40) mindestens einen Kern (41) aufweist, der aus Holz oder einem Holzverbundwerkstoff gefertigt ist, in einer Ebene mit dem Beschlag (30) angeordnet ist und der einteilig mit einer Ausnehmung ausgebildet ist oder der zweiteilig lateral in zwei Kernhälften geteilt ist, wobei in jede der Kernhälften eine Aussparung eingebracht ist, um den Beschlag (30) aufzunehmen, wobei der mindestens eine Kern (41) und der Beschlag (30) zwischen zwei durchgehenden Decklagen (42, 43) angeordnet sind, wobei die beiden durchgehenden Decklagen (42, 43) flächig mit dem mindestens einen Kern (41) und/oder dem Beschlag (30) verbunden sind, und wobei der Beschlag (30) ein Hebelwerk (31) aufweist, das ein bewegliche Möbelteil führt.

2. Wandelement (40) nach Anspruch 1, bei dem das mindestens eine Verbindungselement ein Gewindeeinsatz (44) ist.

3. Wandelement (40) nach Anspruch 1 oder 2, bei dem das mindestens eine Verbindungselement eine Kombination aus einem Lang- und einem Querloch (45, 46) zur Aufnahme eines Drehverbinders (53) ist.

4. Wandelement (40) nach einem der Ansprüche 1 bis 3, bei dem das mindestens eine Verbindungselement eine Profilnut (48) oder eine Feder ist.

5. Wandelement (40) nach einem der Ansprüche 1 bis 4, bei dem die beiden durchgehenden Decklagen (42, 43) flächig auf den mindestens einen Kern (41) und/oder den Beschlag (30) auflaminiert sind.

6. Wandelement (40) nach einem der Ansprüche 1 bis 5, bei der sich das Hebelwerk (31) im geschlossenen Zustand des beweglichen Möbelteils vollständig zwischen den Decklagen (42, 43) befindet.

7. Möbel (10) mit mindestens einem Beschlag (30) zur Führung eines bewegbaren Möbelteils, aufweisend mindestens ein plattenförmiges Wandelement (40) gemäß einem der Ansprüche 1 bis 6.

8. Möbel (10) nach Anspruch 7, aufweisend mindestens ein plattenförmiges Element als weitere Möbelkomponente, mit einer Fläche, auf der das mindestens eine plattenförmige Wandelement (40) mit einer Stirnseite anliegt.

9. Möbel (10) nach Anspruch 8, bei dem das mindestens ein plattenförmiges Element ein Unter- und/oder ein Oberboden (22, 24) ist.

10. Möbel (10) nach Anspruch 9, bei dem mindestens zwei plattenförmige Wandelemente (40) parallel zueinander und beabstandet voneinander angeordnet sind.

11. Möbel (10) nach Anspruch 10, bei dem zwischen den beiden plattenförmigen Wandelementen (40) ein Kasten (23) angeordnet ist.

12. Möbel (10) nach Anspruch 9, bei dem der Unter- und/oder Oberboden (22, 24) die Breite des Möbels bilden und wenigstens ein plattenförmiges Wandelement (40) mindestens 10 cm von einer Außenkante des Unter- und/oder Oberbodens (22, 24) beabstandet ist.

## Claims

1. A plate-shaped wall element (40) for an item of furniture (10), comprising at least one integrated fitting (30) and at least one integrated connecting element for connection to at least one further furniture component, wherein the plate-shape wall element (40) comprises at least one core (41) manufactured from a wood or wood-based material, the core (41) being arranged in a plane with the fitting (30) and being formed in one part with a recess or being divided in the plane of the lateral extension into two core halves, wherein a recess is introduced into each of the core halves, for receiving the fitting (30), wherein the at least one core (41) and the fitting (30) are arranged between two continuous cover layers (42, 43), wherein the two continuous cover layers (42, 43) are connected in a planar manner to the at least one core (41) and/or the fitting (30), and wherein the fitting (30) comprises a lever mechanism (31) which guides the movable furniture part.

2. The wall element (40) according to Claim 1, in which the at least one connecting element is a threaded insert (44).

3. The wall element (40) according to Claim 1 or 2, in which the at least one connecting element is a combination of a longitudinal hole and a transverse hole (45, 46) for accommodating a rotating connector (53).

4. The wall element (40) according to any one of Claims 1 to 3, in which the at least one connecting element is a profile groove (48) or a tongue.

5. The wall element (40) according to any one of Claims 1 to 4, in which the two continuous cover layers (42, 43) are laminated in a planar manner onto the at least one core (41) and/or the fitting (30).

6. The wall element (40) according to any one of Claims 1 to 5, in which the lever mechanism (31) is located completely between the cover layers (42, 43) in the closed state of the movable furniture part.

7. An item of furniture (10) having at least one fitting (30) for guiding a movable furniture part, comprising at least one plate-shaped wall element (40) according to one of claims 1 to 6.

8. The item of furniture (10) according to Claim 7, comprising at least one plate-shaped element as a further furniture component, having a face on which the at least one plate-shaped wall element (40) abuts with an end face.

9. The item of furniture (10) according to Claim 8, in which the at least one plate-shaped element is a bottom and/or a top panel (22, 24).

10. The item of furniture (10) according to Claim 9, in which at least two plate-shaped wall elements (40) are arranged parallel to one another and spaced apart from one another.

11. The item of furniture (10) according to Claim 10, in which a box (23) is arranged between the two plate-shaped wall elements (40).

12. The item of furniture (10) according to Claim 9, in which the bottom and/or top panel (22, 24) form the width of the item of furniture and at least one plate-shaped wall element (40) is spaced apart at least 10 cm from an outer edge of the bottom and/or top panel (22, 24).

## Revendications

1. Élément de paroi (40) en forme de panneau pour un meuble (10), présentant au moins une ferrure intégrée (30) et au moins un élément d'assemblage intégré pour l'assemblage avec au moins un autre composant de meuble, lequel élément de paroi (40) en forme de panneau comporte au moins un élément central (41) fait de bois ou d'un matériau composite à base de bois, qui est disposé dans le même plan que la ferrure (30) et formé en une pièce avec un creux ou en deux parties séparées latéralement en deux moitiés d'élément central, dans lequel un creux est formé dans chacune des moitiés d'élément central pour recevoir la ferrure (30),dans lequel l'au moins un élément central (41) et la ferrure (30) sont disposés entre deux couches de couverture continues (42, 43), les deux couches de couverture continues (42, 43) étant assemblées à plat avec l'au moins un élément central (41) et/ou la ferrure (30), et dans lequel la ferrure (30) présente un mécanisme de levier (31) qui guide une partie de meuble mobile.

2. Élément de paroi (40) selon la revendication 1, dans lequel l'au moins un élément d'assemblage est un insert fileté (44).

3. Élément de paroi (40) selon la revendication 1 ou 2, dans lequel l'au moins un élément d'assemblage est une combinaison d'un trou longitudinal et d'un trou transversal (45, 46) destinée à recevoir un raccord tournant (53).

4. Élément de paroi (40) selon l'une des revendications 1 à 3, dans lequel l'au moins un élément d'assemblage est une rainure profilée (48) ou une languette.

5. Élément de paroi (40) selon l'une des revendications 1 à 4, dans lequel les deux couches de couverture continues (42, 43) sont stratifiées à plat sur l'au moins un élément central (41) et/ou sur la ferrure (30).

6. Élément de paroi (40) selon l'une des revendications 1 à 5, dans lequel le mécanisme de levier (31) se trouve entièrement entre les couches de couverture (42, 43) quand la partie de meuble mobile est fermée.

7. Meuble (10) avec au moins une ferrure (30) pour le guidage d'une partie de meuble mobile, comprenant au moins un élément de paroi (40) en forme de panneau selon l'une des revendications 1 à 6.

8. Meuble (10) selon la revendication 7, comportant au moins un élément en forme de panneau comme autre composant de meuble, avec une surface qui repose par une face sur l'au moins un élément de paroi (40) en forme de panneau.

9. Meuble (10) selon la revendication 8, dans lequel l'au moins un élément en forme de panneau est un fond inférieur et/ou un fond supérieur (22, 24).

10. Meuble (10) selon la revendication 9, dans lequel au moins deux éléments de paroi (40) en forme de panneau sont disposés parallèlement et à distance l'un de l'autre.

11. Meuble (10) selon la revendication 10, dans lequel un coffret (23) est disposé entre les deux éléments de paroi (40) en forme de panneaux.

12. Meuble (10) selon la revendication 9, dans lequel le fond inférieur et/ou le fond supérieur (22, 24) forment la largeur du meuble et au moins un élément de paroi (40) en forme de panneau est écarté de 10 cm d'une arête extérieure du fond inférieur et/ou du fond supérieur (22, 24).
